# EUROPEAN PATENT SPECIFICATION

(11) **EP 3 444 988 B1**
(45) Date of publication and mention of the grant of the patent: **09.06.2021**
(21) Application number: 17781953.9
(22) Date of filing: 14.04.2017
(51) Int. Cl.: H04L 5/00, H04L 27/00, H04W 16/14, H04W 48/12, H04W 48/16, H04W 84/12

(54) **SYSTEM INFORMATION SENDING METHOD AND APPARATUS**
VERFAHREN UND VORRICHTUNG ZUM SENDEN VON SYSTEMINFORMATIONEN
PROCÉDÉ ET APPAREIL D'ENVOI D'INFORMATIONS SYSTÈME

(30) Priority: 15.04.2016 CN 201610235284
(43) Date of publication of application: 20.02.2019
(73) Proprietor: ZTE Corporation, Shenzhen, Guangdong 518057 (CN)
(72) Inventor: XU, Hanqing, Shenzhen Guangdong 518057 (CN); ZHAO, Yajun, Shenzhen Guangdong 518057 (CN); MO, Linmei, Shenzhen Guangdong 518057 (CN)
(74) Representative: Lavoix
(86) International application number: PCT/CN2017/080617
(87) International publication number: WO 2017/177977

(56) References cited:
- WO-A1-2014/166032
- WO-A1-2015/133823
- WO-A1-2016/182955
- WO-A1-2017/054776
- WO-A1-2017/097562
- WO-A1-2017/132479
- CN-A- 101 395 830
- CN-A- 104 968 052
- MEDIATEK INC: "Enhanced DRS Design for LAA", 3GPP DRAFT; R1-156057, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 4 October 2015 (2015-10-04), XP051039817, Retrieved from the Internet: URL:http://www.3gpp.org/ftp/Meetings_3GPP_ SYNC/RAN1/Docs/ [retrieved on 2015-10-04]

## Description

### TECHNICAL FIELD

The disclosure relates, but not limited, to the technical field of wireless communications, and in particular to a method and device for sending system information.

### BACKGROUND

As a possible important development direction of Long Term Evolution (LTE) and wireless communications in future, Long Term Evolution-Unlicensed (LTE-U) means deploying the LTE in a unlicensed carrier to satisfy an increasing demand for capacity of a wireless communication system and improve a use efficiency of an unlicensed spectrum. When the LTE-U is designed, it is needed to consider how a LTE-U system competes with WiFi, radar and other different systems and how the same LTE-U systems compete fair and friendly for the unlicensed carrier to perform data transmission, and moreover it is needed to try not to influence, but retain, a technical characteristic of the LTE. According to the statement of the 3GPP standards meeting, the LTE-U system in Rel-13/14 may also be called an LTE Licensed Assisted Access to Unlicensed Spectrum (LAA) system. Moreover, there is another unlicensed carrier device which may perform data interaction with a piece of User Equipment (UE) without the need of LAA, and the device is generally called a Standalone device.

By adopting a way of Carrier Aggregation (CA) (including a subsequent possible way of Dual Connectivity (DC)), the unlicensed carrier in Rel-13/14 of the LTE of the 3GPP is accessed through the LAA, and a Physical Broadcast Channel (PBCH) is not transmitted on an unlicensed carrier cell. The PBCH is usually used for carrying some important system information, such as downlink bandwidth information, Physical Hybrid-ARQ Indicator Channel (PHICH) configuration information, and System Frame Number (SFN) information (which occupies 8 bits in a System Information Block (SIB), and the rest 2 bits are obtained through a blind detection).

The system information of the unlicensed carrier cell is necessary for the UE, but how to send the system information to the UE is a problem to be solved.

In the document MEDIATEK INC: "Enhanced DRS Design for LAA", 3GPP DRAFT, R1-156057, 3RD GENERATION PARTNERSHIP PROJECT (3GPP), MOBILE COMPETENCE CENTER, 650, ROUTE DES LUCIOLES, F-06921 SOPHIA-ANTIPOLIS CEDEX, FRANCE, vol. RAN WG1, no. Malmo Sweden; 4 October 2015, a DRS subframe can be used for transmitting system information on unlicensed band.

The document WO2017/054776 discloses a method and apparatus for multiplexing DRS within a transmission burst for opportunistic spectrum access, which published on 6.4.2017, which is earlier than the filing date of the present application (14.4.2017) claims the priority date of 30.9.2015, which is earlier than the earliest priority date of the present application (15.4.2016).

The document WO2016/182955 discloses an apparatus for the user equipment, which published on 17.11.2016, which is earlier than the filing date of the present application (14.4.2017) claims the priority date of 8.5.2015, which is earlier than the earliest priority date of the present application (15.4.2016).

The document WO2017/097562 discloses a network node for wireless access operating a cell in a cellular network for a licensed or unlicensed frequency band and arranged for serving wireless devices in a unlicensed frequency band, which published on 15.6.2017, which is after the filing date of the present application (14.4.2017) claims the priority date of 8.12.2015, which is earlier than the earliest priority date of the present application (15.4.2016).

The document WO2017/132479 discloses techniques for broadcast channel management on a shared communication medium, which published on 3.8.2017, which is after the filing date of the present application (14.4.2017) claims the priority date of 8.12.2015, which is earlier than the earliest priority date of the present application (15.4.2016).

### SUMMARY

The following is an overview of the theme elaborated in this application. The overview is not intended to limit the protection scope of the claims.

The present application provides a method and device for sending system information, which may solve a problem of a chance to send system information.

The features of the method and device according to the present disclosure are defined in the independent claims, and the preferable features according to the present invention are defined in the dependent claims.

Compared with a related art, by encapsulating to send a variety of necessary system information and the DRS on the common sub-frame, the method and device for sending system information provided by the embodiments of the disclosure effectively solve a problem of chance, overhead and delay of sending the system information in various scenarios.

Other aspects can be understood after the accompanying drawings and detailed descriptions are read and understood.

### BRIEF DESCRIPTION OF DRAWINGS

FIG. 1 is a flowchart of a method for sending system information according to an embodiment of the disclosure.
FIG. 2 is a schematic diagram of a device for sending system information according to an embodiment of the disclosure.

### DETAILED DESCRIPTION

The embodiments of the disclosure are elaborated below in combination with the accompanying drawings. It is to be noted that the embodiments in the present application and the characteristics in the embodiments may be combined under the condition of no conflicts.

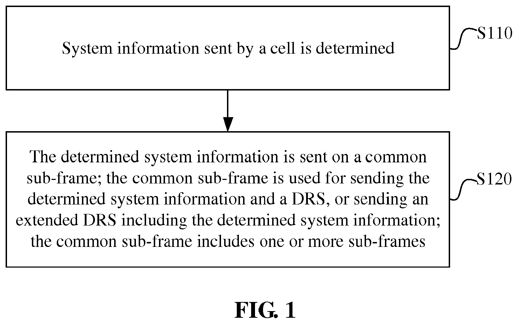

As shown in FIG. 1, the embodiments of the disclosure provide a method for sending system information. The method includes the following steps.

At S110, system information to be sent by a cell is determined.

At S120, the determined system information is sent on a common sub-frame.

The common sub-frame is used for sending the determined system information and a DRS, or sending an extended DRS including the determined system information.

The common sub-frame includes one or more sub-frames.

If it is not emphasized below that the DRS is the extended DRS, the DRS is generally the DRS before extension, namely the DRS not including the system information. The DRS is especially the discovery signal defined in the 3GPP protocol Rel-12/Rel-13 36.211. The extended DRS may be composed of the system information and the DRS before extension.

The system information to be sent by the cell may include: part or all of information in an MIB or a PBCH, and/or part or all of information in an SIB, and/or some other system information.

The part or all of the information in the MIB or the PBCH includes, for example, downlink bandwidth information, PHICH configuration information, and SFN information.

The part or all of the information in the SIB includes, for example, part or all of information in the SIB1, and/or the SIB2, and/or the SIB3 to SIB 13. The part or all of the information in the SIB includes, for example, uplink and downlink sub-frame configuration of a Time Division Duplex (TDD) mode, a special sub-frame configuration, a random access parameter, and SIB scheduling information.

Some other system information includes, for example, a sub-frame number, and/or an operator ID, and/or sub-frame/frame structure information, and/or an occupied duration or the number of occupied symbols.

The determined system information is sent on the common sub-frame may include:
the determined system information is sent on the common sub-frame according to configurations.

The configurations include at least one of a sending configuration on the common sub-frame, a configuration for sending the system information and the DRS, or a pattern configuration of the system information.

The sending configuration on the common sub-frame includes at least one of the following parameters: a period, an offset, or a duration.

The system information may be sent as a component of the DRS or sent along with the DRS.

When the system information is not the component of the DRS, the system information may be sent on a DRS sub-frame, or on the DRS sub-frame and an adjacent sub-frame of the DRS sub-frame, or on a DMTC sub-frame.

Different demands are different for different system information and requirements on sending the DRS. For example, the demands, which correspond to the requirements on a sending frequency of the downlink bandwidth/PHICH configuration/SFN information in the MIB, a sending frequency of the uplink and downlink sub-frame configuration information of the TDD mode in the SIB1, and a sending frequency of the DRS depending on a synchronous and Radio Resource Management (RRM) measurement demand, are different. Therefore, the cell may adjust, aiming at the different demands, to send the different system information and the configuration information of the DRS (including at least one of the period, the duration, or the offset).

Therefore, the sending of the different information in the system information may adopt a mode of independent configuration or combined configuration or hybrid configuration; and/or, the sending of the information in the system information and the DRS may adopt the mode of independent configuration or combined configuration or hybrid configuration.

The independent configuration includes at least one of the following situations:
a) the parameters are independently configured for the different system information; or
b) the parameters are independently configured for the system information and the DRS.

The parameters configured independently include at least one of the following parameters: the period, the offset, the duration, or a sub-frame/symbol position.

For the independent configuration, there may be a constraint relationship between the configuration parameters of the different system information, and there may be a constraint relationship between the configuration parameter of the system information and the configuration parameter of the DRS. When the configuration parameter is the period, the constraint relationship may be a manifold relationship. For example, the period of the DRS is a multiple of the period of the system information; or, the period of the system information is a multiple of the period of the DRS; or, the period of the system information 1 is a multiple of the period of the system information 2. When the configuration parameter is the sub-frame position, for example, the system information 1 is on the sub-frame for sending the DRS; or, the DRS is on the sub-frame for sending the system information; or, the system information 1 is on the sub-frame for sending the system information 2.

The combined configuration includes at least one of the following situations:
a) the parameters are configured in a combined way for the different system information; or
b) the parameters are configured in a combined way for the system information and the DRS.

The parameters configured in a combined way include at least one of the following parameters: the period, the offset, or the duration.

For the combined configuration, uniformly configuring may be that the parameters are configured to be the same. The period of the common sub-frame may be configured as 40 ms, 80ms, and 160ms. The duration of the common sub-frame may be configured as 1-5 sub-frames. In each duration of each period, the different system information and the DRSs may have different configurations or sub-frame information; for example, in a period, the DRS is sent once or many times, or the system information 1 may be sent once or many times.

The combined configuration includes at least one of the following situations:
a) the parameters are configured in a hybrid way for the different system information; specifically, the parameters are independently configured for a part of the different system information, and the parameters are uniformly configured for another part of the different system information; or
b) the parameters are configured in a hybrid way for the system information and the DRS; specifically, the parameters are independently configured for a part of the different system information and the DRS, and the parameters are uniformly configured for another part of the different system information and the DRS.

The sub-frame/symbol position is the position of the sub-frame for sending the system information or the position of the symbol.

A method is that the system information may be sent on each sub-frame on the common sub-frame, or the sub-frame position of the system information on the common sub-frame may be configured. Another method is that the sub-frame position of the system information or the sub-frame position on the common sub-frame is limited, and the system information may only be sent on the sub-frames of these special positions. For example, it may be limited that the system information 1 is sent on the first or the nth sub-frame on the common sub-frame. Or, it is limited that the system information 1 is sent on the sub-frames 0, 5, 4, 9, 1 or 6 on the common sub-frame. The sequence numbers of the sub-frames here are numbered according to the sub-frames in a radio frame, but these sub-frames need to be on the common sub-frame. For the symbol position, it may be limited that the system information 1 is sent on the nth symbol or which symbols on the sub-frame.

For example, in the 3GPP Rel-12/13, the period of the DMTC is 40/80/160ms, the duration is 6ms, and the offset is 0-(the period minus 1)ms.

The common sub-frame may be equal to the DMTC sub-frame, or the DMTC sub-frame after the parameters (including the period, the offset, and/or the duration) are modified, or the newly defined sub-frame (having the configuration parameters like the period, the offset, and/or the duration). The common sub-frame is the newly defined sub-frame. Especially, the common sub-frame has a set of independent configuration parameters.

In an exemplary embodiment, UE may be notified, by an eNodeB of sending configuration parameters and/or corresponding measurement configuration parameters of the common sub-frame. The measurement configuration parameters may be as same as the sending configuration parameters, and may also be a subset of the sending configuration parameters. The measurement configuration parameters include a measurement period, a measurement offset, and/or a measurement duration. The eNodeB may notify the parameters through high-level signaling (for example, the RRC), or a physical layer channel, or DCI.

First of all, the period, the offset, and/or the duration of the common sub-frame may be equal to the period, the offset, and/or the duration of the DMTC. That is, the common sub-frame is the DMTC sub-frame. The DMTC sub-frame is set as the common sub-frame for sending the system information and the DRS. It is assumed that the UE will receive the system information and/or the DRS on the common sub-frame (the DMTC sub-frame).

Or, the existing configuration of the DMTC sub-frame is enhanced, and the enhanced DMTC sub-frame is the common sub-frame. Specifically,
in order to adapt to the requirements on transmitting the different system information in a period which is longer or shorter than the above period, the common sub-frame (the DMTC sub-frame) needs to support more configurations of the period, for example, the period of the common sub-frame (DMTC sub-frame) is 10/20/40/80/160/320/640 ms.

In order to be compatible with the existing method for sending system information, and make the UE receive the information more simply and feasibly, the configuration of the DMTC sub-frame is limited, specifically including:
for example, the period, the offset, or the duration of the DMTC sub-frame is limited. For example, the offset is limited to 0, 5, 1, 6, 4, and/or 9, and it is ensured that the system information 1 may be sent on the sub-frames 0, 5, 1, 6, 4, and/or 9 of the radio frame.

If the common sub-frame is the sub-frame newly defined through a set of independent configuration parameters, in order to be compatible with the existing method for sending system information, and make the UE receive the information more simply and feasibly, the period, the offset, and/or the duration of the common sub-frame are limited. For example, the offset is limited to 0, 5, 1, 6, 4, and/or 9, and it is ensured that the system information may be sent on the sub-frames 0, 5, 1, 6, 4, and/or 9 of the radio frame.

In a scenario of unlicensed carrier, the sending of the system information and the DRS is also limited to whether a channel is idle and a channel state.

For the independent configuration, it is assumed that the offset is 0. The period of the system information 1 may be set as 20ms, the period of the system information 2 may be set as 320ms, and the period of the DRS may be set as 40 ms.

For the combined configuration, a uniform period may be set for all the system information and the DRS, for example, 40 ms.

For the hybrid configuration, the period of the system information 1 may be set as 20ms, and the periods of all the other system information and the DRSs are set as 40 ms.

The common sub-frame includes at least one of the following:
a) the DRS sub-frame;
b) the DRS sub-frame and the adjacent sub-frame of the DRS sub-frame;
c) the DMTC sub-frame; or
d) the newly defined sub-frame.

The determined system information to be sent by the cell includes at least one of the following information:
a) part or all of the information in the MIB or the PBCH;
b) part or all of the information in the SIB; or
c) at least one of the following information: the sub-frame number, the operator ID, the sub-frame structure information, the frame structure information, the occupied duration, or a number of occupied symbols.

The cell is an unlicensed carrier cell.

The unlicensed carrier cell includes: a SCell in a CA scenario, or a PSCell or a SCell in the DC scenario, or the unlicensed carrier cell in a Standalone scenario.

The determined system information is sent on the common sub-frame may include:
the determined system information is sent on any idle sub-frame in the common sub-frames.

For example, the determined system information is sent on a preset idle sub-frame in the common sub-frames.

The determined system information is sent on the common sub-frame may include:
the idle sub-frame for sending the system information is determined in the common sub-frame;
specifically, the idle sub-frame for sending the system information is determined according to at least one of a common sub-frame configuration, an LBT result, or a system information sending policy.

The pattern configuration of the system information includes at least one of:
a) middle 72 subcarriers of the system bandwidth are occupied on the frequency domain;
b) the first four symbols of the second time slot of a transmission sub-frame are occupied on the time domain;
c) the OFDM symbol which is not defined in the DRS on the DRS sub-frame is occupied on the time domain, or the non-DRS symbol on the DRS sub-frame is occupied on the time domain; or
d) the same OFDM symbol is occupied on the time domain with the component signal of the DRS on the DRS sub-frame, and the frequency domain resource which is not occupied by the component signal of the DRS on the DRS sub-frame is occupied on the frequency domain.

In order to enhance the performance of receiving the system information of edge UE or UE in a comparatively poor channel environment, the determined system information is sent on the common sub-frame by using at least one of the following ways:
a) the system information is repeatedly sent on the frequency domain, preferably according to 72 subcarriers or 6 Resource Blocks (RB);
b) the system information is sent repeatedly on one or more OFDM symbols in the common sub-frame; and
c) the system information is sent repeatedly on one or more sub-frames in the common sub-frames.

The determined system information is sent on the common sub-frame may include:
a scrambling sequence of the system information is generated by using at least one of the following ways:
a) the scrambling sequence of the system information is generated by taking a multiple of 40 ms as the period, or the scrambling sequence of the system information is generated many times in 40 ms;
b) the scrambling sequence of the system information is generated by binding with a time slot number;
c) the scrambling sequence of the system information is generated by binding with the sub-frame number; or
d) the scrambling sequence of the system information is generated by binding with the sequence number of the symbol.

The UE is notified of at least one of the following information:
the sending configuration on the common sub-frame, the configuration for sending the system information and the DRS, the pattern configuration of the system information, or the configuration of measuring the system information and the DRS.

In an exemplary embodiment, the method may further include:
part of the system information of the unlicensed carrier cell is determined to be sent by a licensed carrier cell, or by other unlicensed carrier cells.

For example, the downlink bandwidth and/or PHICH configuration information may be sent by the licensed carrier cell, and the SFN information is sent by the unlicensed carrier cell.

For example, the system information of the unlicensed carrier cell SCell in a Secondary eNodeB (SeNB) or a Secondary Cell Group (SCG) may be sent by other unlicensed carrier cells (for example, the PSCell).

The licensed carrier cell may be the licensed carrier cell PCell in the CA scenario, or the licensed carrier cell in a Master eNodeB (MeNB) or a Master Cell Group (MCG).

In an exemplary embodiment, the unlicensed carrier cell sends the determined system information may include:
the determined system information is sent on any idle sub-frame in the DMTC sub-frames. That is, the determined system information is not limited to be sent on the first sub-frame of each radio frame. For the UE, the UE will assume that the determined system information may be received on any idle sub-frame in the DMTC sub-frames. That is, the determined system information is not limited to be received on the first sub-frame of each radio frame.

The idle sub-frame is the sub-frame on which the unlicensed carrier is not occupied by other devices, which is found by the eNodeB or the UE through advanced channel sensing or energy detection on the unlicensed carrier. But the idle sub-frame does not exclude that the present cell transmits simultaneously signals and channels like the DRS or the PDSCH. Or, the idle sub-frame is the sub-frame on which the present cell may use the unlicensed carrier on the sub-frame, which is determined by the eNodeB or the UE through the advanced channel sensing or energy detection on the unlicensed carrier.

For ease of description, the embodiments of the disclosure are described by taking an LAA system as a typical application of an unlicensed carrier system.

In a variety of wireless communication scenarios like the unlicensed carrier, opening/closing of a small cell, and a lean carrier (one of common characteristics of these scenarios is that a Cell Reference Signal (CRS) is not always transmitted, and furthermore, a Primary Synchronization Signal (PSS)/Secondary Synchronization Signal (SSS) may not always be transmitted in half-frame), the UE needs to receive the DRS (referring to the 3GPP Rel-13 TS36.211) and/or other reference signals, and perform cell search, synchronization and/or RRM measurement, and other functions. For implementing such a signal receiving and measuring behavior of the UE, the eNodeB needs to configure a signal measurement timing configuration for the UE, for example, the DMTC. The eNodeB transmits the corresponding signal according to the signal measurement timing configuration. Another method is that the eNodeB first determines a transmission pattern of the signal, and then determines the signal measurement timing configuration of the UE side according to the transmission pattern. In Rel-12/13, the period of the DMTC is 40/80/160ms, and the duration is 6ms.

In the LAA of Rel-13, the DRS has a higher LBT priority, and the eNodeB may transmit the DRS only by monitoring a time interval not less than Xus (for example, 25us). The DRS includes the CRS, the PSS/SSS, and a configurable Channel State Information-Reference Symbol (CSI-RS), which occupy 12 OFDM symbols (including some undefined blank symbols which may be used for transmitting an undefined signal).

The period of the PBCH carrying MIB system information is 40 ms, and the information will be sent on the first sub-frame of each radio frame in 40 ms. The sending of four times of the PBCH in 40 ms carries the same information bit, and the content of the PBCH may be independently decoded every time, so when the channel quality is better, the UE may successfully decode the content of the PBCH only by receiving one of the PBCHs in the 40 ms. If the content is not decoded successfully, the UE softly combines the present content with the content of the PBCH received in the next 10ms, and then performs decoding until the PBCH is decoded successfully.

Part or all of the system information of the unlicensed carrier cell may be sent as a component of the DRS, and/or part or all of the system information of the unlicensed carrier cell may be sent along with the DRS.

In order to make the sending of the PBCH adapt to the sending the DRS, and in consideration of the LBT characteristic, the system information may be sent on any idle sub-frame in the common sub-frames. That is, the system information is not limited to be sent on the first sub-frame of each radio frame.

In an exemplary embodiment, that the system information is sent on which sub-frame of the radio frame may also depend on the common sub-frame configuration, the LBT result, and/or the system information sending policy.

The system information is especially part or all of information (the downlink bandwidth, and/or the PHICH configuration, and/or the SFN) in the MIB.

In an exemplary embodiment, the sending of the system information and the sending of other information in the DRS are independent of one another; or, the sending of the system information and the sending of other information in the DRS are bound together.

For example, when the system information is sent as a component of the DRS, there are two modes. The first mode is that when the DRS is sent each time, the system information is not necessarily sent, and the sending of the system information is configurable. The second mode is that the system information is sent as long as the DRS is sent.

Similarly, when the system information is sent along with the DRS, there are also two modes. The first mode is that when the DRS is sent each time, the system information is not necessarily sent, and the sending of the system information is configurable. The second mode is that the system information is sent as long as the DRS is sent.

In an exemplary embodiment, when the system information is sent, the middle 72 subcarriers of the system bandwidth are occupied on the frequency domain, and the first four symbols of the second time slot of a transmission sub-frame are occupied on the time domain; or, the middle 72 subcarriers of the system bandwidth are occupied on the frequency domain, and it is not limited on the time domain whether the first four symbols of the second time slot of a transmission sub-frame are occupied; or, it is not limited on the frequency domain whether the middle 72 subcarriers of the system bandwidth are occupied, and the first four symbols of the second time slot of a transmission sub-frame are occupied on the time domain; or, both the frequency domain and the time domain are not limited as above.

That is, the system information may be sent on any idle sub-frame in the common sub-frames, the middle 72 subcarriers of the system bandwidth are occupied on the frequency domain, and the first four symbols of the second time slot of a transmission sub-frame are occupied on the time domain; or,
the system information may be sent on any idle sub-frame in the common sub-frames, the middle 72 subcarriers of the system bandwidth are occupied on the frequency domain, and it is not limited on the time domain whether the first four symbols of the second time slot of the transmission sub-frame are occupied. For example, four, one or more (other numbers except four) OFDM symbols at other positions of the transmission sub-frame may be occupied on the time domain. When the four symbols are occupied, coded modulation and mapping of the system information is performed according to a traditional MIB information bit. The system information here may only include part or all of the MIB information, so it may be mapped to one or more OFDM symbols. For example, the DRS occupies the symbols 0/4/5/6/7/11 of the transmission sub-frame at present, and there are also configurable symbols 9/10 for transmitting the CSI-RS, so the system information may be sent occupying 2 or 4 undefined symbols (for example, the symbols 1, 2, 3 and 8) in the DRS on the DRS sub-frame, and/or non-DRS symbols (for example, the symbols 12 and 13) on the DRS sub-frame, and/or the OFDM symbol on the adjacent sub-frame of the DRS sub-frame.

The system information does not include the downlink bandwidth information, but only includes the PHICH configuration, and/or the SFN information. At this point, the system information is sent along with the DRS or as a component of the DRS. It may not be limited that the system bandwidth is mapped to the middle 72 subcarriers of the system bandwidth. Furthermore, the system bandwidth may be mapped to more frequency domain resources of the system bandwidth, or even to full bandwidth. To do so, on the one hand, the limit to the sending is small, and there are more Resource Elements (RE) to carry the system information, that is, more bits of system information may be sent, and moreover, a rule requirement on occupying the system bandwidth may also be solved. In an exemplary embodiment, on the time domain, the system information may be sent on the first four symbols of the second time slot of a transmission sub-frame in the traditional way; or, the system information may be sent on four, one or more (other numbers except four) OFDM symbols at other positions of a transmission sub-frame.

The system information may be sent on any idle sub-frame in the common sub-frames. The system information is not limited to be sent on the first sub-frame of each radio frame. Furthermore, it may be limited that the system information is sent on the nth (*n* is a preset value) idle sub-frame in the common sub-frames or the DMTC, herein *n* may be equal to 1.

In a first method, the minimum period of the common sub-frame or the DMTC is modified to adapt to the way of sending the system information.

For example, the period of the common sub-frame or the DMTC is modified into 10ms. A traditional Broadcast Channel (BCH) or processes of coding, rate matching, scrambling, and modulating of the MIB information may still be mapped to four radio frames in 40 ms without being changed. That the system information is sent on which sub-frame of each radio frame depends on the common sub-frame configuration, the LBT result, and/or the system information sending policy.

For example, it may be limited that the system information is sent on the first available or idle sub-frame in the common sub-frame or the DMTC. Scrambling codes on the sub-frames of each radio frame are the same, and as same as the traditional scrambling codes of each radio frame. Therefore, the UE obtains the last two bits still through a blind detection in the timing of 40 ms. If there is no idle channel monitored on the radio frame, the PBCH is not transmitted on the radio frame.

For example, if the common sub-frame is the DMTC sub-frame, the period of the DMTC is 10ms, and the offset is 2ms, then a DMTC interval is 2-7ms, 12-17ms, 22-27ms, 32-37ms, and so on. If the first idle sub-frame of the DMTC interval is the sub-frame 2, the sub-frame 13, the sub-frame 22, and the sub-frame 34, then the system information may be sent on the above sub-frames. These sub-frames carry the same system information. That is, the information in the 40 ms may be the same, and the SFNs in the 40 ms are different. If there is on idle sub-frame in the DMTC sub-frames, the system information is not sent in the period.

Or, the last two bits of the SNF may be obtained without need of the blind detection in the timing of 40 ms, and explicit codes are in the system information, that is, the SFN includes ten bits (the SFN in the existing MIB has only eight bits, and the last two bits are obtained by the UE performing the blind detection in 40 ms), and all of the ten bits participate in the coded modulation and mapping of the system information. At this point, the initialization of the scrambling sequence of the system information (or called the initialization of a pseudorandom sequence) *Cᵢₙᵢₜ* (referring to the 3GPP protocol 36.211 6.6.1) is no longer performed once according to 40 ms. Furthermore, *Cᵢₙᵢₜ* may be bound with the time slot number or the sub-frame number. For example, the following way is adopted.

The pseudorandom sequence or the scrambling sequence of the system information sent on the sub-frames 0-4 is as same as the sub-frame 0, and the pseudorandom sequence or the scrambling sequence of the system information sent on the sub-frames 5-9 is as same as the sub-frame 5;
or, the pseudorandom sequence or the scrambling sequence of the system information sent on the sub-frames 0-9 is as same as the sub-frame 0; or, the pseudorandom sequence or the scrambling sequence of the system information sent on the sub-frames 0-9 is as same as the sub-frame 5.

In a second method, the period of the DMTC remains the same, namely still 40/80/160ms. In a period, there is only one DMTC occasion (6ms), so the traditional BCH or MIB information may not be sent on four radio frames in 40 ms. Therefore, the above code mapping mode needs to be modified. There are two selections as follows.

The first selection is that: the process of coded modulation of the BCH or MIB information may not be changed, and is still mapped to the four radio frames in 40 ms; but according to the DMTC, the information is not likely to be sent on all of the four radio frames successfully. Therefore, the information may be sent on the four radio frames once or twice. The reason why the information may be sent twice is that the DMTC may cross two radio frames. The system information on the radio frame or the sub-frame outside of the DMTC may not be sent, or is sent through the conventional LBT (differing from a fast LBT mode of the DRS) after the idle channel is monitored.

For example, the MIB information like the SFN is sent through the DRS or the DMTC, and the period is 80ms, because the LBT is required, and it is not required that the information is sent on the first sub-frame of the radio frame but on, for example, the third sub-frame of the frame 15, the SFN is equal to 15, herein 15-mod(15,4)=12, where the 12 is represented by the first eight bits of the SFN information, and mod(15,4)=3 is determined by the UE performing the blind detection. The DRS or the MIB information (including the downlink bandwidth, and/or the PHICH configuration, and/or the SFN) in the DRS may be sent in the DMTC sub-frame many times. If the sub-frames for sending the DRS or the MIB information in the DRS belong to the same radio frame, the SFNs are the same. If the sub-frames for sending the DRS or the MIB information in the DRS do not belong to the same radio frame, the SFNs are different.

The second selection is that the system information may be sent on a plurality of sub-frames in the DMTC sub-frames or sent repeatedly, so as to ensure the robustness of sending the system information. But sending a plurality of sub-frames on the same radio frame needs to use the same scrambling code or use the scrambling code not bound with the radio frame number.

For example, the period of the DMTC is 10ms, and the offset is 2ms, then the DMTC interval is 2-7ms, 12-17ms, 22-27ms, 32-37ms, and so on. If the channel is idle and available in 2-7ms, the system information may be mapped to four or more sub-frames of the interval to be sent repeatedly, but the existing scrambling code may not be used, or else, the UE will consider that the four sub-frames belong to four different radio frames, which leads to chaos. In order to enable the UE to detect blindly the last two bits of the SFN, the four radio frames in 40 ms should use different scrambling codes.

In a third method: the last two bits of the SFN use an idle bit of the PBCH, or all the bits (including eight bits in the MIB and two bits transmitted implicitly) of the SFN are mapped by coding to the system information or the DRS, at this point, the UE has no need to determine the last two bits according to the scrambling code.

At this point, the initialization of the scrambling sequence of the system information (or called the initialization of a pseudorandom sequence) *Cᵢₙᵢₜ* (referring to the 3GPP protocol 36.211 6.6.1) is no longer performed once according to 40 ms. Furthermore, *Cᵢₙᵢₜ* may be bound with the time slot number or the sub-frame number. For example, the following way is adopted.

The pseudorandom sequence or the scrambling sequence of the system information sent on the sub-frames 0-4 is as same as the sub-frame 0, and the pseudorandom sequence or the scrambling sequence of the system information sent on the sub-frames 5-9 is as same as the sub-frame 5;
or, the pseudorandom sequence or the scrambling sequence of the system information sent on the sub-frames 0-9 is as same as the sub-frame 0; or, the pseudorandom sequence or the scrambling sequence of the system information sent on the sub-frames 0-9 is as same as the sub-frame 5.

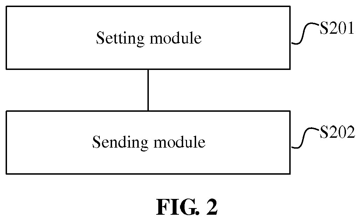

As shown in FIG. 2, the embodiments of the disclosure provide a device for sending system information. The device includes a setting module 201 and a sending module 202.

The setting module 201 is configured to determine the system information to be sent by the cell.

The sending module 202 is configured to send the determined system information on the common sub-frame.

The common sub-frame is used for sending the determined system information and the DRS, or sending the extended DRS including the determined system information. The common sub-frame includes one or more sub-frames.

The sending module 202 is configured to send the determined system information on the common sub-frame by using the following way:
the determined system information is sent on the common sub-frame according to the configurations.

The configurations include at least one of the sending configuration on the common sub-frame, the configuration for sending the system information and the DRS, or the pattern configuration of the system information.

The sending configuration on the common sub-frame includes at least one of the following parameters: the period, the offset, and the duration.

The configuration for sending the system information and the DRS includes:
at least one of the same following parameters is configured for the different system information: the period, the offset, or the duration; or
at least one of the following parameters is independently configured for the different system information: the period, the offset, the duration, or the sub-frame position; or
at least one of the same following parameters is configured for a part of the different system information: the period, the offset, or the duration, and at least one of the following parameters is independently configured for the other part of the different system information: the period, the offset, the duration, or the sub-frame position.

The configuration for sending the system information and the DRS includes:
at least one of the same following parameters is configured for the system information and the DRS: the period, the offset, or the duration; or
at least one of the following parameters is independently configured for the system information and the DRS: the period, the offset, the duration, or the sub-frame position; or
at least one of the same following parameters is configured for a part of the different system information and the DRS: the period, the offset, or the duration, and at least one of the following parameters is independently configured for the other part of the different system information and the DRS: the period, the offset, the duration, or the sub-frame position.

When the parameter is independently configured for the first information and the second information, there is a constraint relationship between the configuration parameter of the first information and the configuration parameter of the second information.

When the configuration parameter is the period, there is a manifold relationship between the period of the first information and the period of the second information.

The first information and the second information are different system information; or, the first information is the system information, and the second information is the DRS.

The common sub-frame includes at least one of the following:
a) the DRS sub-frame;
b) the DRS sub-frame and the adjacent sub-frame of the DRS sub-frame;
c) the DMTC sub-frame; or
d) the newly defined sub-frame.

The determined system information to be sent by the cell includes at least one of the following information:
a) part or all of information in the MIB or the PBCH;
b) part or all of information in the SIB; or
c) at least one of the following information: the sub-frame number, the operator ID, the sub-frame structure information, the frame structure information, the occupied duration, and the number of occupied symbols.

The cell is the unlicensed carrier cell.

The unlicensed carrier cell includes: the SCell in the CA scenario, or the PSCell or the SCell in the DC scenario, or the unlicensed carrier cell in the Standalone scenario.

The sending module 202 is configured to send the determined system information on the common sub-frame by using the following way:
the determined system information is sent on any idle sub-frame in the common sub-frames.

The idle sub-frame for sending the determined system information is the nth idle sub-frame in the common sub-frame, herein n is a preset value.

The sending module 202 is configured to send the determined system information on the common sub-frame by using the following way:
the idle sub-frame for sending the system information is determined in the common sub-frame; specifically,
the idle sub-frame for sending the system information is determined according to at least one of the common sub-frame configuration, the LBT result, or the system information sending policy.

The pattern configuration of the system information includes at least one of:
a) the middle 72 subcarriers of the system bandwidth are occupied on the frequency domain;
b) the first four symbols of the second time slot of a transmission sub-frame are occupied on the time domain;
c) the OFDM symbol which is not defined in the DRS on the DRS sub-frame is occupied on the time domain, or the non-DRS symbol on the DRS sub-frame is occupied on the time domain; or
d) the same OFDM symbol is occupied on the time domain with the component signal of the DRS on the DRS sub-frame, and the frequency domain resource which is not occupied by the component signal of the DRS on the DRS sub-frame is occupied on the frequency domain.

The pattern configuration of the system information includes at least one of:
a) the system information is sent repeatedly on the frequency domain;
b) the system information is sent repeatedly on one or more OFDM symbols in the common sub-frame; or
c) the system information is sent repeatedly on one or more sub-frames in the common sub-frames.

The sending module 202 is configured to send the determined system information on the common sub-frame by using the following way:
the scrambling sequence of the system information is generated by using at least one of the following ways:
a) the scrambling sequence of the system information is generated by taking a multiple of 40 ms as the period, or the scrambling sequence of the system information is generated many times in 40 ms;
b) the scrambling sequence of the system information is generated by binding with the time slot number;
c) the scrambling sequence of the system information is generated by binding with the sub-frame number; or
d) the scrambling sequence of the system information is generated by binding with the sequence number of the symbol.

The device may further include a notifying module 203.

The notifying module 203 is configured to notify the UE of at least one of the following information through the RRC signaling or the DCI:
the sending configuration on the common sub-frame, the configuration for sending the system information and the DRS, the pattern configuration of the system information, and the configuration of measuring the system information and the DRS.

Moreover, the embodiments of the disclosure also provide a computer-readable storage medium storing a computer-executable instruction. The computer-executable instruction, when executed by a processor, performs the above method.

Those of ordinary skill in the art may understand that all or some of the steps in the above method disclosed, the system, the functional modules/units in the device may be implemented as software, firmware, hardware and a proper combination of them. In an implementation of hardware, the division among the functional modules/units mentioned in the above description does not necessarily correspond to the division of physical units; for example, a physical component may have multiple functions, or a function or step may be performed by several physical components in coordination. Some or all of the components may be implemented as software performed by a processor, for example, a digital signal processor or a microprocessor, or implemented as hardware, or implemented as an integrated circuit, for example, an application-specific integrated circuit. Such software may be distributed on computer readable media. The computer readable media may include computer storage media (or non-temporary media) and communication media (or temporary media).

As those of ordinary skill in the art know, the term computer storage media include volatile and non-volatile media, and removable and un-removable media which are implemented in any method or technology for storing information (such as a computer readable instruction, a data structure, a program module or other data). The computer storage media include, but not limited to, an RAM, an ROM, an EEPROM, a flash memory or other memory technologies, a CD-ROM, a Digital Video Disk (DVD) or other optical storage, a cartridge, a tape, a disk storage or other magnetic storage devices, or any other media which may be used for storing expected information and may be accessed by a computer. Moreover, as those of ordinary skill in the art know, the communication media generally include the computer readable instruction, the data structure, the program module or other data, such as carriers or other transmission mechanisms, in a modulation data signal, and may include any information delivery media.

After the system information to be sent by the cell is determined, by encapsulating to send a variety of necessary system information and the DRS on the common sub-frame, the method and device for sending system information provided by the above embodiments effectively solve a problem of chance, overhead and delay of sending the system information in various scenarios.

Those of ordinary skill in the art may understand that all or part of the steps in the method may be performed by related hardware (for example, a processor) instructed through a program. The program may be stored in computer readable storage media, such as a read-only memory, a magnetic disk or a compact disk. In an exemplary embodiment, all or part of the steps of the above embodiments may also be implemented by using one or more integrated circuits. Correspondingly, each module/unit in the embodiments may be implemented in the form of hardware, for example, its corresponding function is implemented through an integrated circuit, or in the form of software function module, for example, its corresponding function is implemented by executing program instructions stored in a memory through a processor. The present application is not limited to any particular combination of hardware and software.

The invention is defined by the appended claims 1-16.

## Claims

1. A method for sending system information, the method comprising:
determining system information to be sent by a cell (S110);
sending the determined system information on a common sub-frame (S120),
wherein the common sub-frame is used for sending the determined system information and a Discovery Reference Signal, DRS, or sending an extended DRS comprising the determined system information, and the common sub-frame comprises one or more sub-frames, **characterised in that**, wherein the common sub-frame comprises at least one of the following: a) a DRS sub-frame; b) the DRS sub-frame and an adjacent sub-frame of the DRS sub-frame; or c) a DRS Measurement Timing Configuration, DMTC, sub-frame,
wherein the determined system information to be sent by the cell comprises at least one of the following information:
a) part or all of information in a Master Information Block, MIB, or in a Physical Broadcast Channel, PBCH;
b) part or all of information in a System Information Block, SIB; or
c) at least one of the following information: a sub-frame number, an operator ID, sub-frame structure information, frame structure information, an occupied duration of the system information, or a number of occupied symbols of the system information.

2. The method according to claim 1, wherein a first bit of a system frame number, SFN, is transmitted in the MIB, and a last bit of the SFN is transmitted in idle bits of the PBCH.

3. The method according to claim 1, wherein sending the determined system information on the common sub-frame comprises:
sending the determined system information on the common sub-frame according to configurations,
wherein the configurations comprise at least one of: a sending configuration on the common sub-frame, a configuration for sending the system information and the DRS, or a pattern configuration of the system information.

4. The method according to claim 3, wherein the sending configuration on the common sub-frame comprises at least one of the following parameters: a period, an offset, or a duration;

5. The method according to claim 3, wherein the configuration for sending the system information and the DRS comprises:
configuration, for the different system information, of at least one of same following parameters: a period, an offset, or a duration; or
independently configuration, for different system information, of at least one of following parameters: the period, the offset, the duration, or a sub-frame position; or
configuration, for a part of the different system information, of at least one of same following parameters: the period, the offset, or the duration, and independently configuration, for another part of the different system information, of at least one of the following parameters: the period, the offset, the duration, or the sub-frame position.

6. The method according to claim 3, wherein the configuration for sending the system information and the DRS comprises:
configuration, for the system information and the DRS, of at least one of same following parameters: a period, an offset, or a duration; or
independently configuration, for the system information and the DRS, of at least one of following parameters: the period, the offset, the duration, or a sub-frame position; or
configuration, for a part of the different system information and the DRS, of at least one of same following parameters: the period, the offset, or the duration, and independently configuration, for another part of the different system information and the DRS, of at least one of the following parameters: the period, the offset, the duration, or the sub-frame position,

7. The method according to claim 5 or 6,wherein when the parameter is independently configured for first information and second information, there is a constraint relationship between a configuration parameter of the first information and a configuration parameter of the second information;
when the configuration parameter is the period, there is a manifold relationship between the period of the first information and the period of the second information;
wherein the first information and the second information are different system information; or, the first information is the system information, and the second information is the DRS.

8. The method according to claim 1, wherein the cell is an unlicensed carrier cell, and wherein the unlicensed carrier cell comprises: a Secondary Cell, SCell ,in a Carrier Aggregation, CA, scenario, a Primary Secondary Cell, PSCell, or a SCell in a Dual Connectivity, DC, scenario, or an unlicensed carrier cell in a Standalone scenario.

9. The method according to claim 8, wherein sending the determined system information on the common sub-frame comprises:
sending the determined system information on any idle sub-frame in the common sub-frames.

10. The method according to claim 9, wherein the idle sub-frame for sending the determined system information is an nth idle sub-frame in the common sub-frames, wherein n is a preset value.

11. The method according to claim 9, wherein sending the determined system information on the common sub-frame comprises:
determining in the common sub-frame the idle sub-frame for sending the system information, which comprises:
determining the idle sub-frame for sending the system information according to at least one of a common sub-frame configuration, a Listen Before Talk, LBT, result, or a system information sending policy.

12. The method according to claim 3, wherein a pattern configuration of the system information comprises at least one of:
a) occupying on a frequency domain middle 72 subcarriers of a system bandwidth;
b) occupying on a time domain first four symbols of a second time slot of a transmission sub-frame;
c) occupying on the time domain an Orthogonal Frequency Division Multiplexing, OFDM, symbol which is not defined in the DRS on the DRS sub-frame, or occupying on the time domain a non-DRS symbol on the DRS sub-frame; or
d) occupying on the time domain a same OFDM symbol with a component signal of the DRS on the DRS sub-frame, and occupying on the frequency domain a frequency domain resource which is not occupied by the component signal of the DRS on the DRS sub-frame.

13. The method according to claim 3, wherein a pattern configuration of the system information comprises at least one of:
a) repeatedly sending the system information on the frequency domain;
b) repeatedly sending the system information on one or more OFDM symbols in the common sub-frame; or
c) repeatedly sending the system information on one or more sub-frames in the common sub-frames.

14. The method according to claim 1, wherein sending the determined system information on the common sub-frame comprises:
generating a scrambling sequence of the system information by using at least one of following ways:
a) generating the scrambling sequence of the system information by taking a multiple of 40 ms as a period, or generating, in 40 ms, the scrambling sequence of the system information many times;
b) generating the scrambling sequence of the system information by binding with a time slot number;
c) generating the scrambling sequence of the system information by binding with a sub-frame number; or
d) generating the scrambling sequence of the system information by binding with a sequence number of the symbol.

15. The method according to claim 3, further comprising:
notifying User Equipment, UE, of at least one of following information through Radio Resource Control, RRC, signaling or Downlink Control Information, DCI:
the sending configuration on the common sub-frame, the configuration for sending the system information and the DRS, the pattern configuration of the system information, and a configuration of measuring the system information and the DRS.

16. A device for sending system information, wherein the device is configured to execute the method for sending system information according to any one of claims 1 to 15.

## Patentansprüche

1. Verfahren zum Senden von Systeminformationen, das Verfahren umfassend:
Bestimmen von Systeminformationen, die von einer Zelle (S110) gesendet werden sollen;
Senden der bestimmten Systeminformationen auf einem gemeinsamen Subframe (S120),
wobei der gemeinsame Subframe zum Senden der bestimmten Systeminformationen und eines Discovery Reference Signals, DRS, oder zum Senden eines erweiterten DRS, umfassend die bestimmten Systeminformationen, verwendet wird und der gemeinsame Subframe einen oder mehrere Subframes umfasst,
**dadurch gekennzeichnet, dass**
wobei der gemeinsame Subframe mindestens eines der Folgenden umfasst: a) einen DRS-Subframe; b) den DRS-Subframe und einen benachbarten Subframe des DRS-Subframe; oder c) einen DRS-Subframe Measurement Timing Configuration, DMTC,
wobei die bestimmten Systeminformationen, die von der Zelle gesendet werden sollen, mindestens einer der folgenden Informationen umfasst:
a) einen Teil oder alle Informationen in einem Master Information Block, MIB, oder in einem Physical Broadcast Channel, PBCH;
b) einen Teil oder alle Informationen in einem System Information Block, SIB; oder
c) mindestens eine der folgenden Informationen: eine Subframe-Nummer, eine Operator-ID, Subframe-Strukturinformationen, Frame-Strukturinformationen, eine belegte 2-Dauer der Systeminformationen, oder eine Anzahl von belegten Symbolen der Systeminformationen.

2. Verfahren nach Anspruch 1, wobei ein erstes Bit einer System-Framenummer, SFN, in dem MIB übertragen wird und ein letztes Bit der SFN in Leerbits des PBCH übertragen wird.

3. Verfahren nach Anspruch 1, wobei ein Senden der bestimmten Systeminformationen auf dem gemeinsamen Subframe Folgendes umfasst:
Senden der bestimmten Systeminformationen auf dem gemeinsamen Subframe gemäß den Konfigurationen,
wobei die Konfigurationen mindestens eines von Folgenden umfassen: eine Sendekonfiguration auf dem gemeinsamen Subframe, eine Konfiguration zum Senden der Systeminformationen und des DRS oder eine Musterkonfiguration der Systeminformationen.

4. Verfahren nach Anspruch 3, wobei die Sendekonfiguration auf dem gemeinsamen Subframe mindestens einen der folgenden Parameter umfasst: eine Periode, ein Offset oder eine Dauer;

5. Verfahren nach Anspruch 3, wobei die Konfiguration zum Senden der Systeminformationen und des DRS Folgendes umfasst:
Konfiguration, für die verschiedenen Systeminformationen, von mindestens einem der folgenden Parameter: eine Periode, ein Offset oder eine Dauer; oder
unabhängige Konfiguration, für verschiedene Systeminformationen, von mindestens einem der folgenden Parameter: die Periode, das Offset, die Dauer oder eine Subframe-Position; oder
Konfiguration, für einen Teil der verschiedenen Systeminformationen, von mindestens einem der folgenden Parameter: die Periode, das Offset oder die Dauer, und unabhängige Konfiguration, für einen anderen Teil der verschiedenen Systeminformationen, von mindestens einem der folgenden Parameter: die Periode, das Offset, die Dauer oder die Subframe-Position.

6. Verfahren nach Anspruch 3, wobei die Konfiguration zum Senden der Systeminformationen und des DRS Folgendes umfasst:
Konfiguration von mindestens einem der folgenden Parameter für die Systeminformationen und das DRS: eine Periode, ein Offset oder eine Dauer; oder
unabhängige Konfiguration für die Systeminformationen und das DRS von mindestens einem der folgenden Parameter: die Periode, das Offset, die Dauer oder eine Subframe-Position; oder
Konfiguration, für einen Teil der verschiedenen Systeminformationen und des DRS, von mindestens einem der folgenden Parameter: die Periode, das Offset oder die Dauer, und unabhängige Konfiguration, für einen anderen Teil der verschiedenen Systeminformationen und des DRS, von mindestens einem der folgenden Parameter: die Periode, das Offset, die Dauer oder die Subframe-Position,

7. Verfahren nach Anspruch 5 oder 6, wobei, wenn der Parameter unabhängig für erste Informationen und zweite Informationen konfiguriert ist, eine Zwangsbeziehung zwischen einem Konfigurationsparameter der ersten Informationen und einem Konfigurationsparameter der zweiten Informationen besteht;
wenn der Konfigurationsparameter die Periode ist, gibt es eine vielfache Beziehung zwischen der Periode der ersten Informationen und der Periode der zweiten Informationen;
wobei die ersten Informationen und die zweiten Informationen verschiedene Systeminformationen sind; oder, die ersten Informationen die Systeminformationen und die zweiten Informationen das DRS ist.

8. Verfahren nach Anspruch 1, wobei die Zelle eine unlizenzierte Trägerzelle ist, und wobei die unlizenzierte Trägerzelle Folgendes umfasst: eine sekundäre Zelle, SCell, in einem Szenario Carrier Aggregation, CA, eine primäre sekundäre Zelle, PSCell, oder eine SCell in einem Szenario Dual Connectivity, DC, oder eine unlizenzierte Trägerzelle in einem Szenario Standalone.

9. Verfahren nach Anspruch 8, wobei ein Senden der bestimmten Systeminformationen auf dem gemeinsamen Subframe Folgendes umfasst:
Senden der bestimmten Systeminformationen auf einem beliebigen freien Subframe in den gemeinsamen Subframes.

10. Verfahren nach Anspruch 9, wobei der Leere Subframe zum Senden der bestimmten Systeminformationen ein n-ter leerer Subframe in den gemeinsamen Subframes ist, wobei n ein voreingestellter Wert ist.

11. Verfahren nach Anspruch 9, wobei ein Senden der bestimmten Systeminformationen auf dem gemeinsamen Subframe Folgendes umfasst:
Bestimmen, in dem gemeinsamen Subframe, des leeren Subframes zum Senden der Systeminformationen, was Folgendes umfasst:
bestimmen des leeren Subframes zum Senden der Systeminformationen gemäß mindestens einem von einer gemeinsamen Subframe-Konfiguration, einem Resultat von Listen Before Talk (LBT) oder einer Richtlinie zum Senden von Systeminformationen.

12. Verfahren nach Anspruch 3, wobei eine Musterkonfiguration der Systeminformationen mindestens eines von Folgendem umfasst:
a) Belegen, auf einer Frequenzdomänenmitte, von 72 Unterträgern einer Systembandbreite;
b) Belegen, auf einer Zeitdomäne, von ersten vier Symbolen eines zweiten Zeitschlitzes eines Übertragungs-Subframes;
c) Belegen, auf der Zeitdomäne, eines Symbols für Orthogonal Frequency Division Multiplexing, OFDM, das nicht in dem DRS auf dem DRS-Subframe definiert ist, oder, auf der Zeitdomäne, eines Nicht-DRS-Symbols auf dem DRS-Subframe; oder
d) Belegung, auf der Zeitdomäne, eines gleichen OFDM-Symbols mit einem Komponentensignal des DRS auf dem DRS-Subframe, und Belegen, auf der Frequenzdomäne, einer Frequenzdomänenressource, die nicht durch das Komponentensignal des DRS auf dem DRS-Subframe belegt ist.

13. Verfahren nach Anspruch 3, wobei eine Musterkonfiguration der Systeminformationen mindestens eines von Folgendem umfasst:
a) wiederholtes Senden der Systeminformationen auf der Frequenzdomäne;
b) wiederholtes Senden der Systeminformationen auf einem oder mehreren OFDM-Symbolen in dem gemeinsamen Subframe; oder
c) wiederholtes Senden der Systeminformationen auf einem oder mehreren Subframes in den gemeinsamen Subframes.

14. Verfahren nach Anspruch 1, wobei ein Senden der bestimmten Systeminformationen auf dem gemeinsamen Subframe Folgendes umfasst:
Erzeugen einer Verschlüsselungssequenz der Systeminformationen unter Verwendung mindestens einer der folgenden Weisen:
a) Erzeugen der Verschlüsselungssequenz der Systeminformation, indem ein Vielfaches von 40 ms als Periode genommen wird, oder Erzeugen der Verschlüsselungssequenz der Systeminformation in 40 ms viele Male;
b) Erzeugen der Verschlüsselungssequenz der Systeminformation durch Binden mit einer Zeitschlitznummer;
c) Erzeugen der Verschlüsselungssequenz durch Binden mit einer Subframe-Nummer; oder
d) Erzeugen der Verschlüsselungssequenz der Systeminformation durch Binden mit einer Sequenznummer des Symbols.

15. Verfahren nach Anspruch 3, ferner umfassend:
Benachrichtigen des Benutzergeräts, UE, über mindestens eine der folgenden Informationen durch Radio Resource Control, RRC, Signalisierung oder Downlink Control Information, DCI:
die Sendekonfiguration auf dem gemeinsamen Subframe, die Konfiguration zum Senden der Systeminformationen und des DRS, die Musterkonfiguration der Systeminformationen und eine Konfiguration zum Messen der Systeminformationen und des DRS.

16. Eine Vorrichtung zum Senden von Systeminformationen, 2 wobei 2 die Vorrichtung konfiguriert ist, um das Verfahren zum Senden von Systeminformationen nach einem der Ansprüche 1 bis 15 auszuführen.

## Revendications

1. Procédé pour l'envoi d'informations système, le procédé comprenant :
la détermination d'informations système à envoyer par une cellule (S110) ;
l'envoi des informations système déterminées sur une sous-trame commune (S120),
dans lequel la sous-trame commune est utilisée pour envoyer les informations système déterminées et un Signal de Référence de Découverte, DRS, ou envoyer un DRS étendu comprenant les informations système déterminées, et la sous-trame commune comprend une ou plusieurs sous-trames,
**caractérisé en ce que**
la sous-trame commune comprend au moins un des éléments suivants : a) une sous-trame de DRS ;
b) la sous-trame de DRS et une sous-trame adjacente de la sous-trame de DRS, ou c) une sous-trame de Configuration de Temporisation de Mesure DRS, DMTC,
dans lequel les informations système déterminées à envoyer par la cellule comprennent au moins une des informations suivantes :
a) tout ou partie des informations dans un Bloc d'Information principal, MIB, ou dans un Canal de Diffusion Physique, PBCH ;
b) tout ou partie des informations dans un Bloc d'Information système, SIB ; ou
c) au moins une des informations suivantes : un numéro de sous-trame, un ID opérateur, une information de structure de sous-trame, une information de structure de trame, une durée occupée des informations système, ou un nombre de symboles occupés des informations système.

2. Procédé selon la revendication 1, dans lequel un premier bit d'un numéro de trames système, SFN, est transmis dans le MIB, et un dernier MIB du SFN est transmis dans des bits libres du PBCH.

3. Procédé selon la revendication 1, dans lequel l'envoi des informations système déterminées sur la sous-trame commune comprend :
l'envoi des informations système déterminées sur la sous-trame commune selon des configurations,
dans lequel les configurations comprennent au moins un de : une configuration d'envoi sur
la sous-trame commune, une configuration pour l'envoi des informations système et le DRS ou une configuration de modèle des informations système,

4. Procédé selon la revendication 3, dans lequel la configuration d'envoi sur la sous-trame commune comprend au moins un des paramètres suivants : une période, un décalage ou une durée ;

5. Procédé selon la revendication 3, dans lequel la configuration pour l'envoi des informations système et le DRS comprend :
une configuration, pour les différentes informations système, d'au moins un des mêmes paramètres suivants : une période, un décalage ou une durée ; ou
indépendamment une configuration, pour différentes informations système, d'au moins un des paramètres suivants : la période, le décalage, la durée ou une position de sous-trame ; ou
une configuration, pour une partie des différentes informations système, d'au moins un des mêmes paramètres suivants : la période, le décalage, ou la durée, et indépendamment une configuration, pour une autre partie des différentes informations système, d'au moins un des paramètres suivants : la période, le décalage, la durée ou la position de sous-trame.

6. Procédé selon la revendication 3, dans lequel la configuration pour l'envoi des informations système et le DRS comprend :
une configuration, pour les informations système et le DRS, d'au moins un des mêmes paramètres suivants : une période, un décalage ou une durée ; ou
indépendamment une configuration, pour les informations système et le DRS, d'au moins un des paramètres suivants : la période, le décalage, la durée ou une position de sous-trame ; ou
une configuration, pour une partie des différentes informations système et du DRS, d'au moins un des mêmes paramètres suivants : la période, le décalage, ou la durée, et indépendamment une configuration, pour une autre partie des différentes informations système et du DRS, d'au moins un des paramètres suivants : la période, le décalage, la durée ou la position de sous-trame,

7. Procédé selon la revendication 5 ou 6, dans lequel quand le paramètre est indépendamment configuré pour de premières informations et de secondes informations, il existe une relation de contrainte entre un paramètre de configuration des premières informations et un paramètre de configuration des secondes informations ;
quand le paramètre de configuration est la période, il existe une relation multiple entre la période de la première information et la période de la seconde information ;
dans lequel la première information et la seconde information sont différentes informations système ; ou, la première information est l'information système, et la seconde information est le DRS.

8. Procédé selon la revendication 1, dans lequel la cellule est une cellule porteuse sans licence, et dans lequel la cellule porteuse sans licence comprend : une Cellule secondaire, Scell dans un scénario d'agrégation de porteuse, CA, une Cellule secondaire primaire, PSCell, ou une SCell dans un scénario de Double Connectivité, DC, ou une cellule porteuse sans licence dans un scénario autonome.

9. Procédé selon la revendication 8, dans lequel l'envoi des informations système déterminées sur la sous-trame commune comprend :
l'envoi des informations système déterminées sur une sous-trame libre dans les sous-trames communes.

10. Procédé selon la revendication 9, dans lequel la sous-trame libre pour l'envoi des informations système déterminées est une *n*^{ème} sous-trame libre dans les sous-trames communes, dans lequel n est une valeur préétablie.

11. Procédé selon la revendication 9, dans lequel l'envoi des informations système déterminées sur la sous-trame commune comprend :
la détermination dans la sous-trame commune de la sous-trame libre pour envoyer les informations système, qui comprennent :
la détermination de la sous-trame libre pour envoyer les informations système selon au moins une d'une configuration de sous-trame commune, un résultat d'écoute avant de parler (Listen Before Talk), LBT, ou une politique d'envoi d'informations système.

12. Procédé selon la revendication 3, dans lequel une configuration de modèle des informations système comprend au moins un de :
a) l'occupation sur un domaine de fréquence de 72 sous-porteuses centrales d'une largeur de bande de système ;
b) l'occupation sur un domaine de temps des quatre premiers symboles d'un second créneau d'une sous-trame de transmission ;
c) l'occupation sur le domaine de temps d'un symbole de Multiplexage de Division de Fréquence Perpendiculaire, OFDM, qui n'est pas défini dans le DRS sur la sous-trame DRS, ou l'occupation sur le domaine de temps d'un symbole non-DRS sur la sous-trame de DRS ; ou
d) l'occupation sur le domaine de temps d'un même symbole OFDM avec un signal de composant du DRS sur la sous-trame de DRS, et l'occupation sur le domaine de fréquence d'une ressource de domaine de fréquence qui n'est pas occupée par le signal de composant du DRS sur la sous-trame DRS.

13. Procédé selon la revendication 3, dans lequel une configuration de modèle des informations système comprend au moins un de :
a) l'envoi répété des informations système sur le domaine de fréquence ;
b) l'envoi répété des informations système sur un ou plusieurs symboles OFDM dans la sous-trame commune ; ou
c) l'envoi répété des informations système sur une ou plusieurs sous-trames libres dans les sous-trames communes.

14. Procédé selon la revendication 1, dans lequel l'envoi des informations système déterminées sur la sous-trame commune comprend :
la génération d'une séquence de brouillage des informations système en utilisant au moins une des modalités suivantes :
a) la génération de la séquence de brouillage des informations système en prenant un multiple de 40 ms comme période, ou la génération, en 40 ms, de la séquence de brouillage des informations système à plusieurs reprises ;
b) la génération de la séquence de brouillage des informations système par une liaison avec un numéro de créneau ;
c) la génération de la séquence de brouillage des informations système par une liaison avec un numéro de sous-trame ; ou
d) la génération de la séquence de brouillage des informations système par une liaison avec un numéro de séquence du symbole,

15. Procédé selon la revendication 3, comprenant en outre :
la notification à l'Équipement Utilisateur, EU, d'au moins une des informations suivantes par le biais d'une signalisation de Contrôle de Ressource Radio, RRC, ou d'une Information de contrôle de téléchargement, DCI :
la configuration d'envoi sur la sous-trame commune, la configuration pour l'envoi des informations système et du DRS, la configuration de modèle des informations système, et une configuration consistant à mesurer les informations système et le DRS.

16. Dispositif pour envoyer des informations système, dans lequel le dispositif est configuré pour exécuter le procédé d'envoi d'informations système selon l'une quelconque des revendications 1 à 15.
